(19) Europäisches Patentamt
European Patent Office
Office européen des brevets

(11) Numéro de publication : **0 371 865 B1**

(12) # FASCICULE DE BREVET EUROPEEN

(45) Date de publication du fascicule du brevet : **20.05.92 Bulletin 92/21**

(51) Int. Cl.$^5$ : **A63B 37/14**

(21) Numéro de dépôt : **89403274.7**

(22) Date de dépôt : **27.11.89**

(54) **Balle de golf.**

(30) Priorité : **29.11.88 FR 8815570**

(43) Date de publication de la demande : **06.06.90 Bulletin 90/23**

(45) Mention de la délivrance du brevet : **20.05.92 Bulletin 92/21**

(84) Etats contractants désignés : **DE FR GB**

(56) Documents cités :
**EP-A- 0 159 550**
**GB-A- 189 551**
**US-A- 4 762 326**

(73) Titulaire : **Salomon S.A.**
**Metz-Tessy**
**F-74011 Annecy (FR)**

(72) Inventeur : **Morell, Joseph**
**3, allée des Treilles**
**F-74490 Annecy-le-Vieux (FR)**

(74) Mandataire : **Martin, Jean-Jacques et al**
**Cabinet REGIMBEAU 26, Avenue Kléber**
**F-75116 Paris (FR)**

EP 0 371 865 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne une balle de golf, du type présentant une face périphérique ayant la forme générale d'une sphère et une pluralité de creux aménagés dans ladite face périphérique et définissant par leurs intersections avec celle-ci des cercles d'intersection répartis sur ladite face périphérique selon un motif déterminé par une subdivision de ladite face périphérique suivant :

– 3 cercles équatoriaux dont chacun est axé sur un axe passant par les centres respectifs de deux faces diamétralement opposées d'un cube inscrit dans la sphère,

– 4 cercles équatoriaux dont chacun est axé sur un axe passant par deux sommets diamétralement opposés du cube,

de façon à définir 24 premières surfaces élémentaires identiques en forme de triangle rectangle isocèle sphérique et 8 secondes surfaces élémentaires identiques en forme de triangle équilatéral sphérique, lesdits cercles d'intersection étant répartis pour l'essentiel à l'intérieur desdites première et secondes surfaces élémentaires, au moins un cercle équatorial déterminé, parmi lesdits cercles équatoriaux, ne coupant aucun cercle d'intersection et subdivisant chacun des autres desdits cercles équatoriaux en deux arcs de cercle équatorial, dont chacun correspond à l'un des deux hémisphères définis par ledit cercle équatorial déterminé, lesdits arcs de cercles équatoriaux se coupant mutuellement par deux ou trois en des points d'intersection déterminés sur chaque hémisphère.

Une balle de golf de ce type est décrite dans le brevet américain N° 4 762 326 qui propose un certain nombre de motifs de répartition des cercles d'intersection à l'intérieur des surfaces élémentaires.

On remarque que, de façon générale, ces motifs connus laissent subsister localement, de la face périphérique sphérique de la balle de golf, des plages relativement importantes, démunies de creux, si bien que l'utilisateur est contraint d'orienter soigneusement sa balle avant de la frapper s'il veut bénéficier d'une probabilité importante d'atteindre la face périphérique de la balle dans des zones de cette face présentant une géométrie à peu près identique à chaque coup, afin d'assurer la reproduction des coups.

Le but de la présente invention est de remédier à cet inconvénient en proposant un mode de répartition des creux d'intersection sur la face périphérique de la balle de golf permettant de réduire dans toute la mesure du possible les plages de cette face périphérique subsistant entre les cercles d'intersection.

A cet effet, la présente invention propose une balle de golf du type indiqué en préambule, en outre caractérisée en ce qu'au moins un cercle d'intersection est disposé autour de l'un, respectif, desdits points d'intersection de trois arcs de cercles équatoriaux.

De préférence, un cercle d'intersection est ainsi disposé respectivement autour de chacun des points d'intersection de trois arcs de cercles équatoriaux, ce qui, allié à un choix judicieux du motif de répartition des cercles d'intersection à l'intérieur de chaque surface élémentaire, permet d'obtenir une couverture aussi complète que possible de la face périphérique de la balle de golf par les cercles d'intersection, c'est-à-dire par les creux ; ainsi, l'utilisateur soucieux de frapper toujours la balle dans des zones présentant une géométrie sensiblement identique conserve pour seul souci, avant chaque coup, de vérifier que l'orientation de la balle n'est pas telle que ce coup atteigne la face périphérique de celle-ci au niveau dudit cercle équatorial déterminé, seule hypothèse entraînant la nécessité de réorienter la balle.

Naturellement, seuls certains des points d'intersection de trois arcs de cercles équatoriaux peuvent présenter un creux, c'est-à-dire un cercle d'intersection d'un tel creux avec la face périphérique de la balle de golf, l'un d'entre eux ou plusieurs d'entre eux pouvant conserver la forme d'une plage intermédiaire entre des cercles d'intersection disposés à l'intérieur de surfaces élémentaires respectives comme le propose le brevet américain précité ou présenter la forme d'un méplat, pour recevoir par exemple un marquage du fabricant ; certes, un tel choix va à l'encontre du but recherché conformément à la présente invention en ce qu'il peut obliger l'utilisateur à réorienter plus souvent sa balle que lorsque chaque point d'intersection de trois arcs de cercles équatoriaux présente un cercle d'intersection, mais cet inconvénient reste limité dans la mesure où le nombre de points d'intersection de trois arcs de cercles équatoriaux ainsi démunis de cercles d'intersection reste lui-même limité.

On remarque que la mise en oeuvre de la présente invention n'entraîne pas de difficulté dans la fabrication de la balle, en raison du fait que l'un des cercles équatoriaux précités, à savoir ledit cercle équatorial déterminé, ne coupe aucun cercle d'intersection d'un creux avec la face périphérique de la balle de golf. Ce cercle équatorial déterminé peut en effet correspondre à un plan de joint lorsque la balle est réalisée par assemblage de deux moitiés identiques ou lorsqu'au moins une couche superficielle de celle-ci, comprenant les creux, est réalisée par moulage en une seule pièce dans un moule lui-même formé de deux moitiés identiques assemblées, ce qui correspond à des procédés de fabrication connus, dont la simplicité et l'économie de mise en oeuvre sont également connues.

Pour pallier l'absence de cercles d'intersection sur ce cercle équatorial déterminé, c'est-à-dire pour réduire en dépit de cette absence les plages de la face périphérique sphérique subsistant à ce niveau entre les cercles d'intersection, on peut prévoir que les arcs de cercle équatorial de l'un des hémisphères soient décalés angulairement, par rapport aux arcs de cercle équatorial respectivement correspondants de l'autre des hémisphères, d'une même valeur autour de l'axe dudit cercle équatorial déterminé ; naturellement, cette notion de décalage angulaire s'entend par référence à la construction géométrique de la subdivision de la face périphérique de la balle en surfaces élémentaires ; par exemple, si ledit cercle équatorial déterminé est axé sur un axe passant par les centres respectifs de deux faces diamétralement opposées du cube, ladite valeur est avantageusement de 45° si bien que chaque axe de cercle équatorial de l'un des hémisphères se raccorde à un arc de cercle équatorial de l'autre des hémisphères sur ledit cercle équatorial déterminé, ces deux arcs de cercle correspondant en fait à des cercles équatoriaux différents.

De préférence, ceux des cercles d'intersection quine sont pas situés à l'intersection de trois arcs de cercles équatoriaux sont répartis selon un motif identique dans des surfaces élémentaires identiques, ledit motif étant de préférence choisi de façon à assurer une répartition aussi homogène que possible des plages de faces périphériques de la balle de golf subsistant entre les cercles d'intersection.

A cet effet, on peut choisir pour la répartition des cercles d'intersection dans une première surface élémentaire un motif inspiré du motif illustré à la figure 9 du brevet américain précité, lequel motif comporte plusieurs rangées mutuellement voisines dont une première est adjacente à l'hypothénuse du triangle rectangle sphérique et dont chacune relie mutuellement les deux côtés de l'angle droit du triangle rectangle sphérique et présente un nombre respectif déterminé de cercles d'intersection de même diamètre régulièrement répartis, ce nombre déterminé étant pour chaque rangée inférieur d'une unité au nombre déterminé de cercles d'intersection dans la rangée respectivement voisine plus proche de l'hypothénuse et chaque cercle d'intersection de chaque rangée étant adjacent à deux cercles d'intersection de ladite rangée respectivement voisine plus proche de l'hypothénuse. Toutefois, au lieu de donner un même diamètre à tous les cercles d'intersection ainsi disposés dans une même surface élémentaire et de respecter un écartement important entre les cercles d'intersection de la première rangée, comme l'enseigne en référence à sa figure 9 le brevet américain précité, on préfère conformément à la présente invention que ladite première rangée comporte quatre cercles d'intersection mutuellement adjacents, adjacents à l'hypothénuse du triangle rectangle sphérique et dont deux cercles d'intersection extrêmes sont en outre adjacents respectivement à l'un et l'autre des côtés de l'angle droit du triangle rectangle sphérique, que lesdites rangées comportent en outre :

– une deuxième rangée de trois cercles d'intersection mutuellement disjoints, dont chacun est adjacent à deux cercles d'intersection de la première rangée et dont deux cercles d'intersection extrêmes sont en outre adjacents respectivement à l'un et l'autre des côtés de l'angle droit du triangle rectangle sphérique,

– une troisième rangée de deux cercles d'intersection mutuellement disjoints, dont chacun est adjacent à deux cercles d'intersection de la deuxième rangée et respectivement à l'un et l'autre des côtés de l'angle droit du triangle rectangle sphérique,

– un cercle d'intersection unique adjacent aux deux cercles d'intersection de la troisième rangée et aux deux côtés de l'angle droit du triangle rectangle sphérique, et que les diamètres respectifs des cercles d'intersection des deuxième et troisième rangées et dudit cercle d'intersection unique soient sensiblement identiques et inférieurs au diamètre des cercles d'intersection de la première rangée.

En ce qui concerne la répartition des cercles d'intersection dans une seconde surface élémentaire, on peut également choisir un motif inspiré du motif illustré à la figure 9 du brevet américain précité, à savoir un motif qui, si l'on définit comme un arc de cercle médian d'une seconde surface élémentaire un arc de cercle centré au centre de la sphère et joignant un sommet dudit triangle équilatéral sphérique au milieu du côté opposé de celui-ci, comporte des premiers cercles d'intersection répartis de façon identique sur lesdits arcs de cercle médians et des seconds cercles d'intersection répartis en rangées dont chacune relie mutuellement deux premiers cercles d'intersection occupant des positions identiques sur lesdits arcs de cercle médians correspondants, les diamètres de ces premiers et seconds cercles d'intersection étant de préférence identiques ; par exemple, une seconde surface élémentaire peut ainsi comporter quinze cercles d'intersection identiques répartis en trois rangées dont chacune longe un côté respectif du triangle équilatéral sphérique et comporte cinq cercles d'intersection adjacents deux à deux et adjacents à ce côté, deux cercles d'intersection extrêmes de chacune de ces rangées étant communs à deux autres, respectives, de ces rangées et étant adjacents à deux autres côtés respectifs du triangle équilatéral sphérique et en trois cercles d'intersection adjacents deux à deux et dont chacun est en outre adjacent à deux cercles d'intersection respectifs de deux desdites trois rangées.

On peut réduire à un minimum les plages de face périphérique de la balle de golf subsistant entre deux cercles d'intersection, à l'intérieur de chaque surface élémentaire comme d'une surface élémentaire à l'autre, en prévoyant que le diamètre des cercles d'intersection d'une seconde surface élémentaire soit intermédiaire entre les diamètres respectifs des cercles d'intersection de la première rangée d'une première surface élémentaire et des cercles d'intersection des deuxièmes et troisièmes rangées d'une première surface élémentaire ; à cet effet également, on donne de préférence au cercle d'intersection situé autour de l'un, respectif, desdits points d'intersection de trois cercles équatoriaux un diamètre tel qu'il soit adjacent à deux cercles d'intersection dont chacun est situé dans l'une, respective, desdites secondes surfaces élémentaires et constitue dans cette seconde surface élémentaire l'un desdits premiers cercles d'intersection ou desdits cercles d'intersection extrêmes, respectivement.

D'autres caractéristiques et avantages d'une balle conforme à la présente invention ressortiront de la description ci-dessous, relative à deux exemples non limitatifs de mise en oeuvre, ainsi que des dessins annexés qui font partie intégrante de cette description.

– La figure 1 illustre la construction, conformément à la présente invention, de sept cercles équatoriaux sur une sphère à partir d'un cube inscrit dans cette dernière.

– La figure 2 montre une balle de golf dont les creux, ou plus précisément les cercles d'intersection de ces creux avec la face périphérique de la balle, sont répartis conformément à la présente invention.

– La figure 3 montre une balle de golf en tout point analogue à celle de la figure 2, si ce n'est que l'un des hémisphères définis par celui desdits cercles équatoriaux quine coupe aucun cercle d'intersection, à savoir un cercle équatorial axé sur un axe passant par les centres respectifs de deux faces diamétralement opposées du cube inscrit dans la sphère, est décalé angulairement de 45° par rapport à l'autre desdits hémisphères, autour de l'axe de ce cercle équatorial.

On se réfèrera en premier lieu à la figure 1 où l'on a désigné par 1 une sphère matérialisant la forme générale de la face périphérique 2 d'une balle de golf 3 illustrée à la figure 2, et par 4 un cube inscrit dans cette sphère 1 sur laquelle il présente 8 sommets 5 à 12 raccordés deux à deux par 12 arêtes non référencées qui, par 4, définissent 6 faces carrées 13 à 18 dont chacune présente un centre 19 à 24 ; le cube 4 lui-même et la sphère 1 présentent un centre commun 25 qui servira de référence lorsqu'on fera appel, par la suite, à la notion de positions diamétralement opposées.

Pour des raisons géométriques, les centres respectifs de deux faces diamétralement opposées du cube 4 se répartissent en trois groupes de deux centres diamétralement opposés, à savoir les centres 19 et 24, 20 et 22, 21 et 23 ; pour mettre en oeuvre la présente invention, on définit par les deux centres de chacun de ces groupes un axe, respectivement 26, 27, 28 et, autour de cet axe, on trace sur la sphère un cercle équatorial respectif 29, 30, 31 ; les trois cercles équatoriaux 29, 30, 31 ont été figurés sur la face périphérique 2 de la balle 3 à la figure 2, bien qu'ils ne soient pas nécessairement matérialisés sur cette dernière.

Egalement pour des raisons géométriques, les sommets du cube 4 se répartissent pour leur part en quatre groupes de deux sommets diamétralement opposés et la figure 1 fait en outre apparaître la présence de 4 axes 32, 33, 34, 35 dont chacun passe par deux sommets diamétralement opposés du cube 4, à savoir respectivement les sommets 5 et 11, 6 et 12, 7 et 9, 8 et 10.

Autour de chacun de ces axes 32 à 35 est tracé sur la sphère 1, un cercle équatorial respectif 36, 37, 38, 39 ; on a également fait apparaître à la figure 2, sur la face périphérique 2 de la balle 3, les 3 plus visibles de ces cercles équatoriaux 36 à 39 ainsi définis qui, toutefois, ne sont pas pour autant nécessairement matérialisés sur cette face 2.

Les quatre cercles équatoriaux 36 à 39 définissent avec les 3 cercles équatoriaux 29 à 31 considérés deux par deux 24 surfaces élémentaires identiques en forme de triangle rectangle isocèle sphérique, mutuellement symétriques par rapport aux 3 cercles équatoriaux 29 à 31, et dont on a désigné l'angle droit par 41, l'hypothénuse par 42 et les deux côtés de l'angle droit 41 par 43 et 44.

Trois par trois, les quatre cercles équatoriaux 36, 37, 38, 39 délimitent entre eux huit surfaces élémentaires identiques 45 en forme de triangle équilatéral sphérique, qui sont régulièrement réparties sur la sphère 1, mutuellement symétriques par rapport aux trois cercles équatoriaux 29 à 31 et sont ainsi délimitées par trois côtés 42, 46, 47 dont chacun constitue également l'hypothénuse d'un triangle rectangle isocèle sphérique tel que 40 respectif ; on a désigné par 48, 49, 50 les trois sommets d'un triangle équilatéral sphérique 45, chacun de ces sommets matérialisant l'intersection de trois cercles équatoriaux dont deux sont axés sur un axe passant par deux sommets diamétralement opposés du cube 4 et dont le troisième est axé sur un axe passant par les centres respectifs de deux faces diamétralement opposées du cube 4.

On retrouve les surfaces élémentaires 40, 45, leurs parties 41 à 44 et 42 à 50 à la figure 2 où l'on a par ailleurs fait apparaître, de même qu'à la figure 1, trois arcs de cercle 51, 52, 53 de la sphère 1, sur le centre 25 de laquelle ces arcs de cercle sont centrés. Chacun de ces trois arcs de cercle 51, 52, 53 relie un sommet respectif 48, 49, 50 d'un triangle équilatéral 45 au milieu du côté respectivement opposé de celuici 46, 47, 42 respectivement ; ces arcs de cercle 48, 49, 50 seront désignés par la suite comme des arcs de cercle médians de la surface élémentaire en forme de triangle équilatéral 45.

De façon connue en soi, dans la face périphérique, sphérique 2 de la balle 3 sont aménagés des creux qui présentent par exemple la forme de calottes sphériques et définissent des cercles par leur intersection avec cette face périphérique 2.

Dans leur majorité, les cercles d'intersection ainsi définis sont répartis suivant des motifs déterminés respectivement à l'intérieur des surfaces élémentaires 40 et à l'intérieur des surfaces élémentaires 45, sans chevauchement d'aucun des cercles équatoriaux dans les trois exemples illustrés bien qu'un tel chevauchement soit admissible dans une certaine mesure ; toutefois, en vue de la mise en oeuvre de la présente invention, l'un au moins de ces cercles équatoriaux, à savoir le cercle 29, ne coupe aucun des cercles d'intersection des creux avec la face périphérique 2 de la balle 3 pour correspondre à un plan de joint entre deux moitiés de la balle si celle-ci est réalisée en deux moitiés, ou entre deux moitiés d'un moule destiné à la réalisation de la balle, ou au moins d'une couche superficielle de celle-ci comprenant les creux, en une seule pièce par moulage ; de préférence, et bien que l'on ne sorte pas du cadre de la présente invention en adoptant une disposition différente, le motif de répartition des creux, c'est-à-dire des cercles d'intersection de ces derniers avec la face périphérique de la balle, est identique d'une surface élémentaire 40 à l'autre, de même que le motif de répartition des creux ou des cercles d'intersection dans les surfaces élémentaires 45 ; précisément, le mode de mise en oeuvre de l'invention illustré à la figure 2 reprend l'ensemble de ces dispositions préférées, d'une façon qui va être décrite à présent plus en détail.

Dans ce cas, dans chaque surface élémentaire 40, les cercles d'intersection des creux avec la face périphérique 2, sphérique, de la balle 3 se répartissent de la façon suivante :

- une première rangée 54 de quatre cercles d'intersection 53 mutuellement identiques, c'est-à-dire d'un même diamètre $D_1$ choisi de telle sorte que les quatre cercles de cette rangée soient adjacents deux à deux et adjacents à l'hypothénuse 42 de la surface élémentaire 40, et de telle sorte que chacun des cercles 55 d'extrémité de cette rangée 54 soit en outre adjacent à l'un, respectif, des deux côtés 43 et 44 de l'angle droit 41 ; le diamètre $D_1$ peut être aisément déterminé, à cet effet, par un Homme du métier ;
- une deuxième rangée 56 comportant trois cercles 57 identiques, c'est-à-dire de même diamètre $D_2$ inférieur au diamètre $D_1$ et choisi, de façon aisément déterminable par un Homme du métier, de telle sorte que les cercles 57 soient mutuellement disjoints mais soient adjacents à deux, respectifs, des cercles 55 de la première rangée 54, située entre la rangée 56 et l'hypothénuse 42 de la surface élémentaire 40, et que chacun des cercles 57 extrêmes de la rangée 56 soit en outre adjacent à l'un, respectif, des deux côtés 43 et 44 de l'angle droit 41 ;
- une troisième rangée 58 de deux cercles 59 de même diamètre $D_2$ que les cercles 57 de la deuxième rangée 56, lequel est en outre choisi de telle sorte que les deux cercles 59 de la rangée 58 soient mutuellement disjoints mais soient adjacents à deux, respectifs, des cercles 57 de la deuxième rangée 56 plus proche de l'hypothénuse 42 et que chacun des cercles 59 soit adjacent à l'un, respectif, des côtés 43 et 44 de l'angle droit 41 ;
- un cercle d'intersection unique 60 de même diamètre $D_2$ que les cercles 57 et 59, lequel est en outre tel que ce cercle 60 soit tangent à la fois aux cercles 59 de la troisième rangée 58 et aux deux côtés 43 et 44 de l'angle droit 41 ; le diamètre $D_2$ peut être aisément déterminé, à l'effet des positions relatives précédemment décrites des cercles 55, 57, 59, 60, par un Homme du métier.

De façon générale, dans ce qui précède comme dans ce qui suit, on entend par caractère "adjacent", à propos des cercles d'intersection d'un creux avec la face périphérique 2 de la balle 3, soit deux à deux, soit vis-à-vis d'un côté délimitant la surface élémentaire qui les contient pour l'essentiel, une relation tangentielle ou un écartement mutuel tel qu'il soit faible en regard du diamètre des cercles concernés, et par exemple au plus égal au quart de ce diamètre, ce chiffre étant indiqué à titre d'exemple non limitatif.

Dans chaque surface élémentaire 45, et dans le cas du mode de mise en oeuvre de l'invention qui a été illustré à la figure 2, les cercles d'intersection des creux avec la face périphérique 2 de la balle 3 présentent le même diamètre $D_3$ intermédiaire entre les diamètres $D_1$ et $D_2$ et se répartissent de la façon suivante :

- trois rangées 61, 62, 63 identiques de cinq cercles identiques 64, dont le diamètre $D_3$ est choisi de telle sorte que, dans chaque rangée 61, 62, 63, les cercles 64 soient mutuellement adjacents et soient adjacents à un côté 42, 46, 47 respectivement voisin de la rangée 61, 62, 63 à laquelle appartiennent ces cercles 64 ; en outre, les deux cercles extrêmes de chacune des rangées 61, 62, 63 sont centrés sur un arc de cercle médian 51, 52, 53 respectif de la surface élémentaire 45, et sont communs à deux des rangées 61, 62, 63 ;
- trois rangées 65, 66, 67 identiques comptant chacune deux cercles 68 identiques, de diamètre $D_3$, ces deux cercles étant centrés sur l'un, respectif, des arcs de cercle médian 51, 52, 53 de la surface élémentaire 45 et ces cercles 68 étant mutuellement adjacents deux à deux ainsi qu'à quatre des cercles 64, appartenant à deux rangées 61, 62, 63 différentes, et plus précisément à deux cercles 64 respectifs de deux des trois rangées 61, 62, 63.

On remarque que, sur chacun des arcs de cercle médian 51, 52, 53, les cercles 64 et 68 sont répartis de façon identique, à raison d'un cercle 64 et d'un cercle 68 entre chacun des sommets 48, 49, 50 de la surface élémentaire 45 et un point 69 défini comme le point d'intersection des trois arcs de cercle médian 51, 52, 53 de cette surface, et d'un cercle 64 entre chacun des côtés 42, 46, 47 de la surface élémentaire 45 et ce point d'intersection 69.

Comme les diamètres $D_1$ et $D_2$, le diamètre $D_3$ peut être aisément déterminé par un Homme du métier, en fonction du diamètre de la face périphérique 2 de la balle 3.

En outre, conformément à la présente invention, des creux matérialisés par des cercles 70 d'intersection avec la face périphérique 2 de la balle 3 sont aménagés respectivement autour de certaines des intersections mutuelles des cercles équatoriaux 30, 31, 36, 37, 38, 39, les intersections de ces derniers avec le cercle équatorial 29 restant par contre démunies de creux.

Plus précisément, si l'on désigne respectivement par 2a et 2b deux hémisphères définis, sur la face périphérique 2 de la balle 3, par le cercle équatorial 29, ce cercle 29 subdivise chacun des autres cercles équatoriaux 30, 31, 36, 37, 38, 39 en deux arcs de cercle, en pratique des demi-cercles, respectivement 30a et 30b, 31a et 31b, 36a et 36b (visible uniquement à la figure 3 qui sera décrite ultérieurement), 37a et 37b, 38a et 38b, 39a et 39b, dont chacun est situé sur l'un, respectif, desdits hémisphères 2a et 2b ; sur chacun de ces hémisphères, les arcs de cercles équatoriaux respectivement correspondants se coupent mutuellement d'une part par deux, en des points non référencés correspondant respectivement au sommet de l'angle droit tel que 41 de certaines surfaces élémentaires 40, et d'autre part par trois en des points qui correspondent à ceux des sommets tels que 48, 49, 50 des surfaces élémentaires 45 quine sont pas situés sur le cercle équatorial 29, à savoir en quatre points respectifs pour chacun des hémisphères 2a et 2b ; les seuls de ces derniers points qui soient visibles à la figure 2 sont deux sommets 49 et 50 d'une surface élémentaire 45 située dans l'hémisphère 2a, auxquelles se croisent respectivement les arcs de cercle 30a, 36a, 39a et les arcs de cercles 3a, 36a, 37a ; de façon non visible, deux autres de ces points sont définis sur l'hémisphère 2a respectivement par l'intersection des arcs de cercle 30a, 37a, 38a et par l'intersection des arcs de cercle 31a, 38a, 39a ; de façon également non visible, quatre autres de ces points sont définis sur l'hémisphère 2b respectivement par l'intersection des arcs de cercle 30b, 36b, 39b, l'intersection des arcs de cercle 31b, 36b, 37b, l'intersection des arcs de cercle 30b, 37b, 38b, et l'intersection des arcs de cercle 31b, 38b, 39b.

De préférence, un cercle 70 d'intersection d'un creux avec la face périphérique 2 est disposé respectivement autour de chaque point d'intersection de trois des arcs de cercles équatoriaux précités, c'est-à-dire si l'on se réfère à la figure 2 autour de chacun des sommets 49 et 50 de la surface élémentaire 45 quine sont pas situés sur le cercle équatorial 29 (cas du sommet 48), étant entendu qu'un Homme du métier peut en déduire aisément la disposition de tels cercles autour des autres points d'inter- section de trois des arcs de cercles équatoriaux précités dans l'hémisphère 2a comme dans l'hémisphère 2b ; par contre, ceux des points d'intersection de ces arcs de cercles équatoriaux qui sont situés sur le cercle 29, comme c'est le cas du sommet 48 de la surface élémentaire 45 illustrée à la figure 2, restent démunis de tels cercles d'intersection, c'est-à-dire de creux ; de préférence, chacun des cercles d'intersection 70 présente un diamètre $D_4$ tel qu'il soit adjacent à deux cercles d'intersection 64, dont chacun constitue l'un des cercles d'intersection extrêmes de deux des rangées telles que 61, 62, 63 adjacentes aux côtés tels que 42, 46, 47 d'une surface élémentaire 45 respective ; le diamètre $D_4$ est inférieur au diamètre $D_2$ lorsqu'on adopte la disposition des cercles d'intersection 55, 57, 59, 60, 64, 68 précédemment décrite, étant entendu que cette disposition de même que le choix des diamètres qui en découle ne constituent que des exemples non limitatifs.

Il ressort de l'examen de la figure 2 que l'absence de cercle d'intersection sur le cercle équatorial 29 peut laisser subsister autour de chacun des sommets tels que 48 d'une surface élémentaire 45 qui sont situés sur ce cercle équatorial 29 une plage relativement importante 71 de la face périphérique sphérique 2 de la balle 3. Cette plage 71 peut être utilisée pour effectuer un marquage de la balle par le fabricant mais on peut également préférer la réduire en adoptant une subdivision de la face périphérique 2 de la balle 3 illustrée à la figure 3.

Cette subdivision est construite géométriquement comme on l'a décrit en référence à la figure 1 si ce n'est qu'après avoir défini les cercles équatoriaux 29 à 31 et 36 à 39, et la subdivision de chaque cercle équatorial 30, 31, 36, 37, 38, 39 en deux arcs de cercle propres à chacun des hémisphères 2a, 2b définis par le cercle équatorial 29, respectivement, on décale angulairement tous les arcs de cercle équatoriaux de l'un de ces hémisphères d'une même valeur, autour de l'axe 26 du cercle équatorial 29, et dans un même sens 72, si bien que la subdivision de chaque hémisphère 2a, 2b en surfaces élémentaires 40 et 45 reste inchangée par rapport à ce qui a été décrit en référence à la figure 2, et que l'on retrouve à l'identique sur chaque hémisphères 2a ou 2b, dans le cas du mode de mise en oeuvre illustré à la figure 3, les surfaces élémentaires 40 et 45, les cercles d'intersection 55, 57, 59, 60, 64, 68 répartis dans celles-ci et les cercles d'intersection 70 situés autour de chacun des points d'intersection respectifs de trois des arcs de cercles équatoriaux 30a, 31a, 36a, 37a, 38a (non visible à la figure 3), 39a sur l'hémisphère 2a et 30b (non visible à la figure 3), 31b, 36b, 37b, 39b sur l'hémisphère 2b ; toutefois, les deux arcs d'un même cercle équatorial ne se rejoignent plus sur le cercle équatorial 29 mais si, comme on l'a illustré à la figure 3, la valeur du décalage angulaire relatif des deux hémisphères 2a et 2b est de 45°, en un point 48a situé sur le cercle 29 et correspondant à un sommet de l'une des surfaces élémentaires 45 de l'hémisphère 2a se rejoignent par exemple les arcs de cercles équatoriaux 37a, 39a et 31b alors qu'en un point 48b également situé sur le cercle 29, décalé de 45° dans le sens 72 par rapport au point 48a et correspondant à un sommet d'une surface élémentaire identique à la surface élémentaire 45 mais située sur l'hémisphère 2b, se rejoignent dans cet exemple les arcs de cercles équatoriaux 30a, 37b et 39b ; on remarque qu'autour de chacun des points 48a et 48b subsiste une plage respective 71a, 71b de la face périphérique 2 de la balle 3 beaucoup moins importante que la page 71 subsistant en 48 dans le cas du mode de mise en oeuvre de l'invention illustré à la figure 2.

De façon générale, les modes de mise en oeuvre de l'invention qui viennent d'être décrits ne constituent que des exemples non limitatifs, par rapport auxquels on pourra prévoir de nombreuses variantes sans pour autant sortir du cadre de la présente invention ; en particulier, certains des cercles d'intersection 70, prévus dans les exemples préférés précédemment décrits au nombre de 4 par hémisphère 2a ou 2b ou l'un d'entre eux seulement, pourront être omis et remplacés par exemple par un méplat respectif de marquage de la balle par le fabricant, lequel méplat sera bien visible et par conséquent facile à éviter lors de l'impact.

## Revendications

1. Balle de golf, du type présentant une face périphérique (2) ayant la forme générale d'une sphère (1) et une pluralité de creux aménagés dans ladite face périphérique (2) et définissant par leurs intersections avec celle-ci des cercles d'intersection (55, 57, 59, 60, 64, 68, 70) répartis sur ladite face périphérique (2) selon un motif répétitif déterminé par une subdivision de ladite face périphérique (2) suivant :

- 3 cercles équatoriaux (29 à 31) dont chacun est axé sur un axe (26 à 28) passant par les centres respectifs (19 à 84) de deux faces (13 à 18) diamétralement opposées d'un cube (4) inscrit dans la sphère (1),
- 4 cercles équatoriaux (36 à 39) dont chacun est axé sur un axe (32 à 35) passant par deux sommets (5 à 12) diamétralement opposés du cube (4),

de façon à définir 24 premières surfaces élémentaires (40) identiques en forme de triangle rectangle isocèle sphérique et 8 secondes surfaces élémentaires (45) identiques en forme de triangle équilatéral sphérique, lesdits cercles d'intersection (55, 57, 59, 60, 64, 68, 70) étant répartis pour l'essentiel à l'intérieur desdites première et secondes surfaces élémentaires (40, 45), au moins un cercle équatorial déterminé (29), parmi lesdits cercles équatoriaux (29 à 31, 36 à 39), ne coupant aucun cercle d'intersection (55, 57, 59, 60, 64, 68, 70) et subdivisant chacun des autres desdits cercles équatoriaux (30, 31, 36 à 39) en deux arcs de cercle équatorial (2a, 2b), dont chacun correspond à l'un des deux hémisphères (2a, 2b) définis par ledit cercle équatorial déterminé (29), lesdits arcs de cercles équatoriaux (30a et 39b, 31a et 31b, 36a et 36b, 37a et 37b, 38a et 38b, 39a et 39b) se coupant mutuellement par deux ou trois en des points d'intersection déterminés (49, 50) sur chaque hémisphère (2a, 2b),

caractérisée en ce qu'au moins un cercle d'intersection (70) est disposé autour de l'un, respectif, desdits points (49, 50) d'intersection de trois arcs de cercles équatoriaux (30a et 39b, 31a et 31b, 36a et 36b, 37a et 37b, 38a et 38b, 39a et 39b).

2. Balle de golf selon la revendication 1, caractérisée en ce qu'un cercle d'intersection (70) est disposé respectivement autour de chacun desdits points d'intersection (49, 50) de trois arcs de cercles équatoriaux (30a et 30b, 31a et 31b, 36a et 36b, 37a et 37b, 38a et 38b, 39a et 39b).

3. Balle de golf selon l'une quelconque des revendications 1 et 2, caractérisée en ce que les arcs de cercle équatorial (30a, 31a, 36a, 37a, 38a, 39a) de l'un (2a) des hémisphères (2a, 2b) sont décalés angulairement, par rapport aux arcs de cercle équatorial respectivement correspondants (30b, 31b, 36b, 37b, 38b, 39b) de l'autre (2b) des hémisphères (2a, 2b), d'une même valeur autour de l'axe (26) dudit cercle équatorial déterminé (29).

4. Balle de golf selon la revendication 3, caractérisée en ce que ledit cercle équatorial déterminé (29) est axé sur un axe (26) passant par les centres respectifs (19 et 24) de deux faces (13 et 18) diamétralement opposés du cube (4) et en ce que ladite valeur est de 45°.

5. Balle de golf selon l'une quelconque des revendications 1 à 4, caractérisée en ce que des cercles d'intersection (29 à 31, 36 à 39) sont répartis selon un motif identique dans des surfaces élémentaires (40, 45) identiques.

6. Balle de golf selon l'une quelconque des revendications 1 à 5, caractérisée en ce que, dans une première surface élémentaire (40), ledit motif comporte plusieurs rangées (54, 56, 58, 60) mutuellement voisines dont une première (54) est adjacente à l'hypothénuse (42) du triangle rectangle sphérique et dont chacune relie mutuellement les deux côtés (43, 44) de l'angle droit (41) du triangle rectangle sphérique et présente un nombre respectif déterminé de cercles d'intersection (55, 57, 59, 60) de même diamètre ($D_1$, $D_2$) régulièrement répartis, ce nombre déterminé étant pour chaque rangée (56, 58, 60) inférieur d'une unité au nombre déterminé de cercles d'intersection dans la rangée respectivement voisine (54, 56, 58) plus proche de l'hypothénuse (42) et chaque cercle d'intersection (57, 59, 60) de chaque rangée (56, 58, 60) étant adjacent à deux cercles d'intersection (55, 57, 59) de ladite rangée respectivement voisine (54, 56, 58) plus proche de l'hypothénuse (42).

7. Balle de golf selon la revendication 6, caractérisée en ce que ladite première rangée (54) comporte quatre cercles d'intersection (55) mutuellement adjacents, adjacents à l'hypothénuse (42) du triangle rectangle sphérique et dont deux cercles d'intersection extrêmes (55) sont en outre adjacents respectivement à l'un et l'autre des côtés (42, 43) de l'angle droit (41) du triangle rectangle sphérique, en ce que lesdites rangées comportent en outre :

– une deuxième rangée (56) de trois cercles d'intersection (57) mutuellement disjoints, dont chacun est adjacent à deux cercles d'intersection (55) de la première rangée (54) et dont deux cercles d'intersection extrêmes (57) sont en outre adjacents respectivement à l'un et l'autre des côtés (42, 43) de l'angle droit (41) du triangle rectangle sphérique,

– une troisième rangée (58) de deux cercles d'intersection (59, 57) mutuellement disjoints, dont chacun est adjacent à deux cercles d'intersection (55) de la deuxième rangée (56) et respectivement à l'un et l'autre des côtés (42, 43) de l'angle droit (41) du triangle rectangle sphérique,

– un cercle d'intersection unique (60) adjacent aux deux cercles d'intersection (59) de la troisième rangée (58) et aux deux côtés (42, 43) de l'angle droit (41) du triangle rectangle sphérique,

et en ce que les diamètres respectifs ($D_2$) des cercles d'intersection des deuxième et troisième rangées et dudit cercle d'intersection unique sont sensiblement identiques et inférieurs au diamètre ($D_1$) des cercles d'intersection (55) de la première rangée (54).

8. Balle de golf selon l'une quelconque des revendications 1 à 7, caractérisée en ce que, si l'on définit comme un arc de cercle médian d'une seconde surface élémentaire un arc de cercle (51, 52, 53) centré au centre (25) de la sphère (1) et joignant un sommet (48, 49, 50) dudit triangle équilatéral sphérique au milieu du côté opposé (42, 46, 47) de celui-ci, ledit motif comporte, dans une seconde surface élémentaire (45) :

– des premiers cercles d'intersection (64, 68) répartis de façon identique sur lesdits arcs de cercle médian (51, 52, 53),

– des seconds cercles d'intersection (64, 68) répartis en rangées (61, 62, 63, 65, 66, 67) dont chacune relie mutuellement deux premiers cercles d'intersection (64, 68) occupant des positions identiques sur lesdits arcs de cercle médians (51, 52, 53) correspondants.

9. Balle de golf selon la revendication 8, caractérisée en ce que deux premiers cercles d'intersection (64, 68) occupant des positions identiques sur lesdits arcs de cercles médians (51, 52, 53) correspondants, dans une seconde surface élémentaire (45), présentent le même diamètre ($D_3$).

10. Balle de golf selon l'une quelconque des revendications 8 et 9, caractérisée en ce que deux rangées (61, 62, 63, 65, 66, 67) occupant des positions identiques dans une seconde surface élémentaire (45) sont identiques.

11. Balle de golf selon l'une quelconque des revendications 8 à 10, caractérisée en ce que les cercles d'intersection (64, 68) d'une même rangée (61, 62, 63, 65, 66, 67), dans une seconde surface élémentaire (45), présentent le même diamètre ($D_3$).

12. Balle de golf selon l'une quelconque des revendications 8 à 1, caractérisée en ce que les cercles d'intersection (64, 68) présentent le même diamètre ($D_3$) dans une seconde surface élémentaire (45).

13. Balle de golf selon l'une quelconque des revendications 8 à 12, caractérisée en ce qu'un cercle d'intersection (70) situé autour d'un point (49, 50) d'intersection de trois arcs de cercles équatoriaux (30a et 30b, 31a et 31b, 36a et 36b, 37a et 37b, 38a et 38b, 39a et 39b) est adjacent à deux cercles d'intersection (64) dont chacun est situé dans l'une, respective, desdites seconds surfaces élémentaires (45) et constitue l'un desdits premiers cercles d'intersection (64).

14. Balle de golf selon l'une quelconque des revendications 1 à 7, caractérisée en ce qu'une seconde surface élémentaire (45) comporte quinze cercles d'intersection identiques (64, 68), répartis en :

– trois rangées (61, 62, 63) dont chacune longe un côté respectif (42, 46, 47) du triangle équilatéral sphérique et comporte cinq cercles d'intersection (64) adjacents deux à deux et adjacents à ce côté (42, 46, 47), deux cercles d'intersection extrêmes (64) de chacune de ces rangées (61, 62, 63) étant communs à deux autres, respectives, de ces rangées (61? 62, 63) et étant adjacents à deux autres côtés (42, 46, 47) respectifs du triangle équilatéral sphérique,

– trois cercles d'intersection (68) adjacents deux à deux et dont chacun est en outre adjacent à deux cercles d'intersection respectifs (64) de deux desdites trois rangées (61, 62, 63).

15. Balle de golf selon les revendications 7 et 14 en combinaison, caractérisée en ce que le diamètre ($D_3$) des cercles d'intersection (64, 68) d'une seconde surface élémentaire (45) est intermédiaire entre les diamètres respectifs ($D_1$, $D_2$) des cercles d'intersec-

tion (55) de la première rangée (54) d'une première surface élémentaire (40) et des cercles d'intersection (57, 59) des deuxièmes et troisièmes rangées (56, 58) d'une première surface élémentaire (40).

16. Balle de golf selon l'une quelconque des revendications 14 et 15, caractérisée en ce qu'un cercle d'intersection (70) situé autour d'un point (49, 50) d'intersection de trois arcs de cercles équatoriaux (30a et 30b, 31a et 31b, 36a et 36b, 37a et 37b, 38a et 38b, 39a et 39b) est adjacent à deux cercles d'intersection (64) dont chacun est situé dans l'une, respective, desdites secondes surfaces élémentaires (45) et constitue, dans cette seconde surface élémentaire (45), l'un desdits cercles d'intersection extrêmes (64).

## Patentansprüche

1. Golfball mit einer Umfangsfläche (2), die die allgemeine Form einer Kugel (1) und eine Mehrzahl von Vertiefungen aufweist, die in der genannten Umfangsfläche (2) angeordnet sind und durch ihre Schnittstellen mit dieser Schnittkreise (55, 57, 59, 60, 64, 68, 70) definieren, die auf der genannten Umfangsfläche (2) entsprechend einem Wiederholungsmuster verteilt sind, das durch eine Unterteilung der genannten Umfangsfläche (2) bestimmt ist, und zwar entsprechend:

– 3 Äquatorialkreisen (29 bis 31), deren jeder auf eine Achse (26 bis 28) ausgerichtet ist, die durch die entsprechenden Mitten (19 bis 24) zweier einander diametral gegenüberliegender Seiten (13 bis 18) eines der Kugel (1) einbeschriebenen Würfels (4) verlaufen,

– 4 Äquatorialkreisen (36 bis 39), deren jeder auf eine Achse (32 bis 35) ausgerichtet ist, die durch zwei diametral gegenüberliegende Scheitel (5 bis 12) des Würfels (4) verlaufen,

dergestalt, um 24 identische erste Elementarflächen (40) in Form sphärischer, gleichschenkliger rechteckiger Dreiecke und 8 identische zweite Elementarflächen (45) in Form sphärischer gleichseitiger Dreiecke zu definieren, wobei die genannten Schnittkreise (55, 57, 59, 60, 64, 68, 70) im wesentlichen innerhalb der genannten ersten und zweiten Elementarflächen (40, 45) verteilt sind, zumindest ein bestimmter Äquatorialkreis (29) unter den genannten Äquatorialkreisen (29 bis 31, 36 bis 39) keinen einzigen der Schnittkreise (55, 57, 59, 60, 64, 68, 70) schneidet und jeden der anderen der genannten Äquatorialkreise (30, 31, 36 bis 39) in zwei äquatoriale Kreisbögen (2a, 2b) unterteilt, deren jeder mit einer von beiden Halbkugeln (2a, 2b) korrespondiert, die durch den genannten bestimmten Äquatorialkreis (29) definiert sind, wobei die genannten äquatorialen Kreisbögen (30a und 30b, 31a und 31b, 36a und 36b, 37a und 37b, 38a und 38b, 39a und 39b) sich gegenseitig zu zweit oder zu dritt in bestimmten Schnittpunkten (49, 50) auf jeder Halbkugel (2a, 2b) schneiden,

dadurch gekennzeichnet, daß zumindest ein Schnittkreis (70) um einen der genannten Schnittpunkte (49, 50) dreier äquatorialer Kreisbögen (30a und 30b, 31a und 31b, 36a und 36b, 37a und 37b, 38a und 38b, 39a und 39b) herum angeordnet ist.

2. Golfball nach Anspruch 1, dadurch gekennzeichnet, daß ein Schnittkreis (70) um jeden der genannten Schnittpunkte (49, 50) dreier äquatorialer Kreisbögen (30a und 30b, 31a und 31b, 36a und 36b, 37a und 37b, 38a und 38b, 39a und 39b) herum angeordnet ist.

3. Golfball nach einem der Ansprüche 1 und 2, dadurch gekennzeichnet, daß die äquatorialen Kreisbögen (30a, 31a, 36a, 37a, 38a, 39a) der einen (2a) der Halbkugeln (2a, 2b) relativ zu den jeweils korrespondierenden äquatorialen Kreisbögen (30b, 31b, 36b, 37b, 38b, 39b) der anderen (2b) der Halbkugeln (2a, 2b) winkelmäßig um den gleichen Betrag um die Achse (26) des genannten, bestimmten Äquatorialkreises (29) herum versetzt sind.

4. Golfball nach Anspruch 3, dadurch gekennzeichnet, daß der genannte, bestimmte Äquatorialkreis (29) auf eine Achse (26) ausgerichtet ist, die durch die entsprechenden Mitten (19 und 24) zweier diametral gegenüberliegender Seiten (13 und 18) des Würfels (4) verläuft, und daß der genannte Betrag 45° beträgt.

5. Golfball nach einem der Ansprüche 1 bis 4, dadurch gekennzeichnet, daß die Schnittkreise (29 bis 31, 36 bis 39) entsprechend einem identischen Muster in identischen Elementarflächen (40, 45) verteilt sind.

6. Golfball nach einem der Ansprüche 1 bis 5, dadurch gekennzeichnet, daß in einer ersten Elementarfläche (40) das genannte Muster mehrere zueinander benachbarte Reihen (54, 56, 58, 60) aufweist, deren erste (54) an die Hypothenuse (42) des sphärischen rechteckigen Dreiecks angrenzt und von denen jede die beiden Seiten (43, 44) des rechten Winkels (41) des sphärischen rechteckigen Dreiecks miteinander verbindet'und eine entsprechende bestimmte Anzahl von Schnittkreisen (55, 57, 59, 60) des gleichen Durchmessers ($D_1$, $D_2$) in regelmäßiger Verteilung aufweist, wobei diese bestimmte Anzahl bei jeder Reihe (56, 58, 60) um eins geringer ist als die bestimmte Anzahl der Schnittkreise in der entsprechenden benachbarten Reihe (54, 56, 58), die der Hypothenuse (42) näher gelegen ist, und jeder Schnittkreis (57, 59, 60) jeder Reihe (56, 58, 60) an zwei Schnittkreise (55, 57, 59) der genannten entsprechenden, benachbarten Reihe (54, 56, 58) angrenzt, die der Hypothenuse (42) näher gelegen ist.

7. Golfball nach Anspruch 6, dadurch gekennzeichnet, daß die genannte erste Reihe (54) vier Schnittkreise (55) aufweist, die aneinander und an die Hypothenuse (42) des sphärischen rechteckigen Dreiecks angrenzen und deren äußerste Schnittkreise (55) außerdem an die eine bzw. die andere Seite (42, 43) des rechten Winkels (41) des sphärischen rechteckigen Dreiecks angrenzen, daß die genannten Reihen außerdem aufweisen:

- eine zweite Reihe (56) mit drei voneinander getrennten Schnittkreisen (57), von denen jeder an zwei Schnittkreise (55) der ersten Reihe (54) angrenzt und deren beide äußersten Schnittkreise (57) außerdem an die eine bzw. andere Seite (42, 43) des rechten Winkels (41) des sphärischen rechteckigen Dreiecks angrenzt,
- eine dritte Reihe (58) mit zwei voneinander getrennten Schnittkreisen (59, 57), von denen jeder an zwei Schnittkreise (55) der zweiten Reihe (56) und an die eine bzw. andere Seite (42, 43) des rechten Winkels (41) des sphärischen rechteckigen Dreiecks angrenzt,
- einen einzelnen Schnittkreis (60), der an beide Schnittkreise (59) der dritten Reihe (58) und an beide Seiten (42, 43) des rechten Winkels (41) des sphärischen rechteckigen Dreiecks angrenzt,

und dadurch, daß die betreffenden Durchmesser ($D_2$) der Schnittkreise der zweiten und dritten Reihe und des genannten einzelnen Schnittkreises im wesentlichen identisch und kleiner sind als der Durchmesser ($D_1$) der Schnittkreise (55) der ersten Reihe (54).

8. Golfball nach einem der Ansprüche 1 bis 7, dadurch gekennzeichnet, daß, wenn man als einen medianen Kreisbogen einer zweiten Elementarfläche einen Kreisbogen (51, 52, 53) definiert, der auf das Zentrum (25) der Kugel (1) ausgerichtet ist und einen Scheitel (48, 49, 50) des genannten sphärischen gleichseitigen Dreiecks mit der Mitte der gegenüberliegenden Seite (42, 46, 47) desselben verbindet, das genannte Muster in einer zweiten Elementarfläche (45) aufweist:

- erste Schnittkreise (64, 68), die in gleicher Weise auf den genannten medianen Kreisbogen (51, 52, 53) verteilt sind,
- zweite Schnittkreise (64, 68), die in Reihen (61, 62, 63, 65, 66, 67) verteilt sind, deren jede zwei erste Schnittkreise (64, 68) miteinander verbindet, die gleiche positionen auf den genannten korrespondierenden medianen Kreisbögen (51, 52, 53) einnehmen.

9. Golfball nach Anspruch 8, dadurch gekennzeichnet, daß zwei erste Schnittkreise (64, 68), die identische Positionen auf den genannten entsprechenden medianen Kreisbögen (51, 52, 53) in einer zweiten Elementarfläche (45) einnehmen , den gleichen Durchmesser ($D_3$) besitzen.

10. Golfball nach einem der Ansprüche 8 und 9, dadurch gekennzeichnet, daß zwei Reihen (61, 62, 63, 65, 66, 67), die gleiche positionen in einer zweiten Elementarfläche (45) einnehmen, identisch sind. ;

11. Golfball nach einem der Ansprüche 8 bis 10, dadurch gekennzeichnet, daß die Schnittkreise (64, 68) einer gleichen Reihe (61, 62, 63, 65, 66, 67) in einer zweiten Elementarfläche (45) den gleichen Durchmesser ($D_3$) besitzen.

12. Golfball nach einem der Ansprüche 8 bis 11, dadurch gekennzeichnet, daß die Schnittkreise (64, 68) den gleichen Durchmesser ($D_3$) in einer zweiten Elementarfläche (45) besitzen.

13. Golfball nach einem der Ansprüche 8 bis 12, dadurch gekennzeichnet, daß ein Schnittkreis (70), der um einen Schnittpunkt (49, 50) dreier äquatorialer Kreisbögen (30a und 30b, 31a und 31b, 36a und 36b, 37a und 37b, 38a und 38b, 39a und 39b) herum angeordnet ist, an zwei Schnittkreise (64) angrenzt, deren jeder in einer betreffenden der genannten zweiten Elementarflächen (45) gelegen ist und den einen der genannten ersten Schnittkreise (64) bildet.

14. Golfball nach einem der Ansprüche 1 bis 7, dadurch gekennzeichnet, daß eine zweite Elementarfläche (45) fünfzehn identische Schnittkreise (64, 68) aufweist, die verteilt sind in:

- drei Reihen (61, 62, 63), deren jede sich längs einer betreffenden Seite (42, 46, 47) des sphärischen gleichseitigen Dreiecks erstreckt und fünf Schnittkreise (64) aufweist, die je paarweise aneinander angrenzen und an diese Seite (42, 46, 47) angrenzen, wobei zwei äußerste Schnittkreise (64) jeder dieser Reihen (61, 62, 63) zwei anderen betreffenden dieser Reihen (61, 62, 63) gemeinsam sind und an zwei weitere betreffende Seiten (42, 46, 47) des sphärischen gleiseitigen Dreiecks angrenzen,
- drei Schnittkreisen (68), die paarweise aneinander angrenzen, und deren jeder außerdem an zwei betreffende Schnittkreise (64) zweier der genannten drei Reihen (61, 62, 63) angrenzt.

15. Golfball nach den Ansprüchen 7 und 14 in Kombination, dadurch gekennzeichnet, daß die Größe des Durchmessers ($D_3$) der Schnittkreise (64, 68) einer zweiten Elementarfläche (45) zwischen den Größen der betreffenden Durchmesser ($D_1$, $D_2$) der Schnittkreise (55) der ersten Reihe (54) einer ersten Elementarfläche und der Schnittkreise (57, 59) der zweiten und dritten Reihe (56, 58) einer ersten Elementarfläche (40) gelegen ist.

16. Golfball nach einem der Ansprüche 14 und 15, dadurch gekennzeichnet, daß ein Schnittkreis (70), der um einen Schnittpunkt (49, 50) dreier äquatorialer Kreisbögen (30a und 30b, 31a und 31b, 36a und 36b, 37a und 37b, 38a und 38b, 39a und 39b) herum angeordnet ist, an zwei Schnittkreise (64) angrenzt, deren jeder in einer betreffenden der genannten zweiten Elementarflächen (45) gelegen ist und, in dieser zweiten Elementarfläche (45), einen der genannten äußersten Schnittkreise (64) bildet.

## Claims

1. A golf ball of the type having a peripheral surface (2) having the general shape of a sphere (1) and a plurality of dimples arranged in the said peripheral surface (2) and defining by their intersection with this circles of intersection (55,57,59,60,64,68,70) distributed on the said peripheral surface (2) in accordance with a repetitive motif determined by subdivision of the said peripheral surface (2) along:

- 3 equatorial circles (29 to 31) of which each is centred on an axis (26 to 28) passing through the respective centres (19 to 24) of two diametrically opposed faces (13 to 18) of a cube (4) inscribed in the sphere (1),
- 4 equatorial circles (36 to 39) of which each is centred on an axis (32 to 35) passing through two diametrically opposed apices (5 to 12) of the cube (4),

in a manner to define 24 identical first elemental surfaces (40) in spherical isosceles right-angle triangle form and 8 second identical elemental surfaces (45) in spherical equilateral triangle form, the said intersection circles (55,57,59,60,64,68,70) being distributed essentially inside the said first and second elemental surfaces (40,45), at least one determined equatorial circle (29), amongst the said equatorial circles (29 to 31,36 to 39), cutting none of the intersection circles (55,57,59,60,64,68,70) and subdividing each of the others of the said equatorial circles (30,31,36 to 39) into two equatorial circular arcs, of which each corresponds to one of the two hemispheres (2a,2b) defined by the said determined equatorial circle (29), the said equatorial circular arcs (30a and 10b, 11a and 31b, 36a and 36b, 17a and 37b, 38a and 38b, 39a and 19b) cutting each other in pairs or threes at determined points of intersection (49,50) on each hemisphere (2a,2b),

characterised in that at least one intersection circle (70) is arranged about a respective one of the said points (49,50) of intersection of 3 equatorial circular arcs (30a and 30b, 31a and 31b, 36a and 36b, 37a and 37b, 38a and 38b, 39a and 39b).

2. A golf ball according to claim 1, characterised in that an intersection circle (70) is arranged respectively about each of the said points of intersection (49,50) of 3 equatorial circular arcs (30a and 30b, 31a and 31b, 16a and 36b, 37a and 37b, 18a and 38b, 39a and 39b).

3. A golf ball according to claim 1 or claim 2, characterised in that the equatorial circular arcs (30a,31a,36a,37a,38a,39a) of one (2a) of the hemispheres (2a,2b) are angularly displaced, with respect to the respectively corresponding circular arcs (30b,31b,36b,37b, 38b,39b) of the other (2b) of the hemispheres (2a,2b) by the same amount about the axis (26) of the said determined circular arc (29).

4. A golf ball according to claim 3, characterised in that the said determined equatorial circle (29) is centred on an axis (26) passing through the respective centres (19 and 24) of two diametrically opposed faces (13 and 18) of the cube (4) and in that the said amount is 45°.

5. A golf ball according to any one of claims 1 to 4, characterised in that the intersection circles (29 to 11, 16 to 39) are distributed according to an identical motif in the identical elemental surfaces (40,45).

6. A golf ball according to any one of claims 1 to 5, characterised in that, in a first elemental surface (40), the said motif comprises several mutually neighbouring rows (54,56,58,60) of which a first (54) is adjacent to the hypothenuse (42) of the spherical right-angle triangle and of which each mutually connects the two edges (43,44) of the right angle (41) of the spherical right-angle triangle and has a respective determined number of regularly distributed intersection circles (55,57,59,60) of the same diameter ($D_1$,$D_2$), this determined number being for each row less by one unit than the determined number of intersection circles in the respectively neighbouring row (54,56,58) nearer the hypothenuse (42) and each intersection circle (57,59,60) of each row (56,58,60) being adjacent at two intersection circles (55,57,59) of the said respectively neighbouring row (54,56,58) nearer the hypothenuse (42).

7. A golf ball according to claim 6, characterised in that the said first row (54) comprises 4 mutually adjacent intersection circles (55), adjacent the hypothenuse (42) of the spherical right-angle triangle and of which two end intersection circles (55) are further respectively adjacent to one and the other of the sides (42,43) of the right angle (41) of the spherical right-angle triangle, in that the said rows further comprise:

- a second row (56) of 3 mutually disjoint intersection circles (57), of which each is adjacent to two intersection circles (55) of the first row (54) and of which two end intersection circles (57) are further respectively adjacent to the one and the other of the sides (42,43) of the right angle (41) of the spherical right-angle triangle,
- a third row (58) of 2 mutually disjoint intersection circles (59,57) of which each is adjacent to two intersection circles (55) of the second row (56) and respectively to the one and the other of the sides (42,43) of the right angle (41) of the spherical right-angle triangle,
- one single intersection circle (60) adjacent to the 2 intersection circles (59) of the third row (58) and to the two sides (42,41) of the right angle (41) of the spherical right-angle triangle,

and in that the respective diameters ($D_2$) of the intersection circles of the first and second rows and of the said single intersection circle are substantially identical and less than the diameter ($D_1$) of the intersection circles (55) of the first row (54).

8. A golf ball according to any one of claims 1 to 7, characterised in that, if there is defined as a median circular arc of a second elemental surface a circular arc (51,52,53) centred on the centre (25) of the sphere (1) and joining an apex (48,49,50) of the said spherical equilaterial triangle to the midpoint of the opposite side (42,46,47) of this, the said motif comprises, in a

of which each is also adjacent to two respective intersection circles (64) of two of the said 3 rows (61,62,63).

15. A golf ball according to claims 7 and 14 in combination, characterised in that the diameter ($D_3$) of the intersection circles (64,68) of a second elemental surface (45) is intermediate between the respective

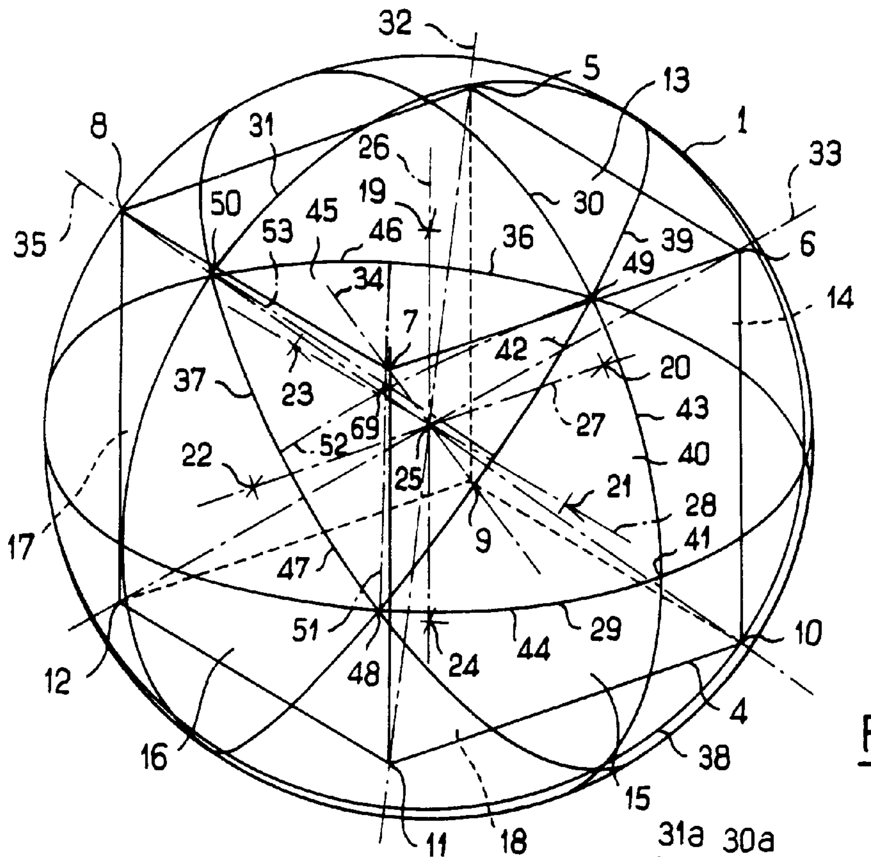
32
5
13
1
33
8
31
26
19
30
39
6
35
50
53
45
46
36
49
14
34
7
42
20
37
23
43
27
69
22
52
25
40
21
28
17
9
41
47
10
12
51
48
24
44
29
4
16
38
15
11
18

FIG.1

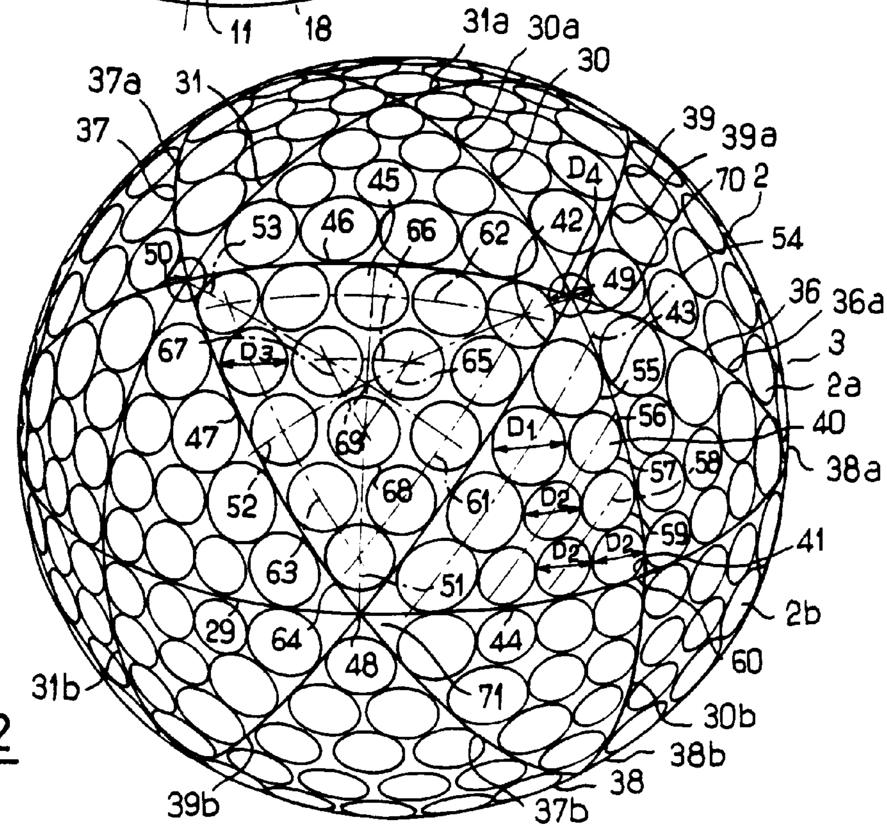
31a
30a
30
37a
31
39
39a
37
D4
70
2
45
54
53
46
66
62
42
50
49
36
36a
43
3
67
D3
65
55
2a
40
56
D1
47
69
57
58
38a
68
61
D2
52
59
D2
D2
41
63
51
2b
29
64
44
48
60
31b
71
30b
38b
38
39b
37b

FIG.2

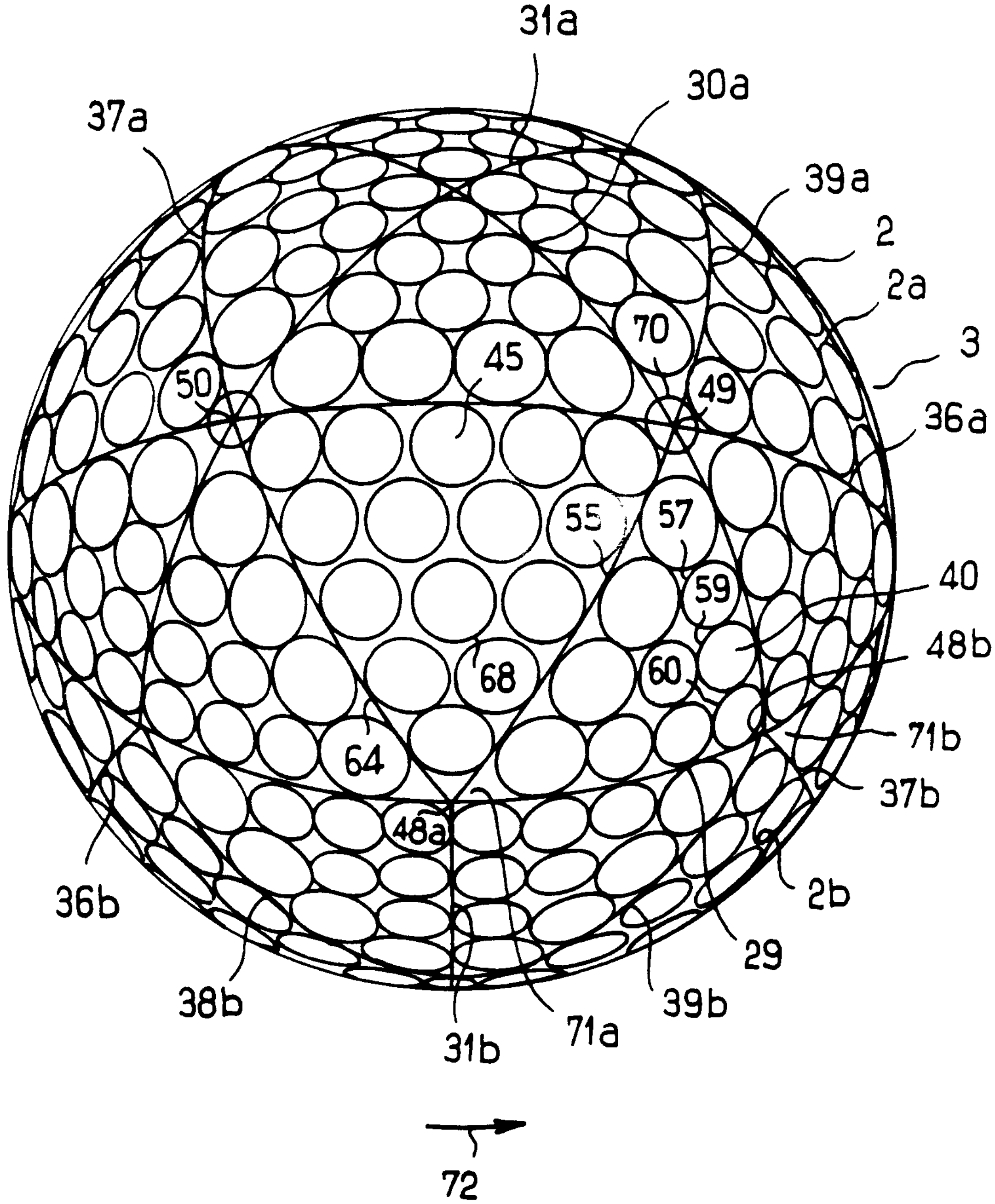
31a
30a
37a
39a
2
2a
3
70
45
50
49
36a
55
57
59
40
48b
68
60
71b
64
37b
48a
36b
2b
29
38b
39b
31b
71a
72

FIG_3